# EUROPEAN PATENT APPLICATION

(11) **EP 1 292 083 A2**
(43) Date of publication of application: **12.03.2003**
(21) Application number: 02077525.0
(22) Date of filing: 25.06.2002
(51) Int. Cl.: H04L 29/06

(54) **Method for processing requests in a network adaptor**

(30) Priority: 06.09.2001 GB 1215227
(71) Applicant: Zarlink Semiconductor Limited, Swindon, Wiltshire SN4 2QW (GB)
(72) Inventor: Floyd, Geoffrey Edward, Yelverton, Devon PL20 7LR (GB); Frost, Timothy Michael Edmund, Wooolwell, Plymouth PL6 7QE (GB)
(74) Representative: Asquith, Julian Peter

(57) **Abstract**

A system is provided for processing requests for service from a plurality of modules, the system comprising:
a processor arranged to process said requests;
FIFO queue means providing a FIFO queue for storing the identities of said modules; and
control means for placing in the FIFO queue the identities of modules requiring service by the processor,
wherein when the processor is ready to service another module the processor reads the identity of the module at the head of the FIFO queue, and services that module.

## Description

The invention relates to a system and method for processing requests for service from modules. In one embodiment, the modules are contexts, and the requests for service are interrupts received from the contexts.

Time division multiplexing (TDM) is a system commonly used for sharing resources on a communication link. Consider for example a single "wire" carrying multiple voice or data channels between call switches of a telephone network. The data stream on the wire is divided in time into successive frames of equal duration. Each frame is further sub-divided in time into a sequence of slots (e.g. numbered 0 to 31), where each slot can accommodate 8 bits. The number of slots in a frame is determined by the data rate of the link and the duration of the frame. Multiple channels are formed on the data stream on a single wire (sometimes referred to as a "stream") by allocating a slot number to each channel. Thus, a first channel (CH0) is formed from the set of first slots in successive frames, a second channel (CH1) is formed from the set of second slots in successive frames, etc. A typical system may comprise 32 wires (or "streams"), with each frame divided into 32 slots, providing a total of 1024 data channels. A further two wires provide slot and frame synchronisation signals respectively.

Telephone network operators are keen to make use of packet networks to carry user traffic. For example, such packet networks may make use of the well known Internet Protocol (IP) to route data packets. In order to enable packet networks to interwork with conventional TDM networks, it is necessary to provide a mechanism for efficiently converting between the TDM format and the packet format.

Different channels may carry data to be transmitted to different destinations, and the packet stream is therefore divided into "contexts", where different contexts may correspond to different destination networks. Each context contains a sequence of packets corresponding to the same destination.

The conversion of TDM data to packets (and back again) is undertaken in hardware. When a problem is encountered in the conversion process an interrupt is raised to the host control processor.

The invention recognizes that it is desirable to be able to process interrupts from several requesting contexts using a single control processor, and not to miss context interrupts during periods when the processor is overloaded.

It is known for a single processor to handle interrupts from several contexts. When an interrupt is identified the processor undertakes the necessary operations to service and clear the interrupt. If the processor has not serviced an interrupt from a context before the same context generates another interrupt the subsequent interrupt is lost.

When the host control processor receives an interrupt the following schemes have been used to identify the first context to process:
1. The processor loops through each context checking for requests (round robin). For systems with a large numbers of contexts this places a considerable load on the processor resulting in long delays identifying the requesting context. If context requests arrive too quickly the processor becomes overloaded and requests are lost.
2. A priority encoder selects the highest priority context request. For systems with a large numbers of contexts a priority encoder is expensive to implement and imposes a significant delay identifying the requesting context.

The invention seeks to solve the problems associated with round robin and priority encoder request selection.

According to the invention there is provided a system and method for processing requests for service from a plurality of modules, as set out in the accompanying claims.

The invention will now be more particularly described, by way of example only, with reference to the accompanying drawings, in which:
Figure 1 illustrates schematically a system for transporting TDM data across a packet network;
Figure 2 illustrates in more detail TDM-packet conversion units of the system of Figure 1; and
Figure 3 shows a host control processor provided with a FIFO.

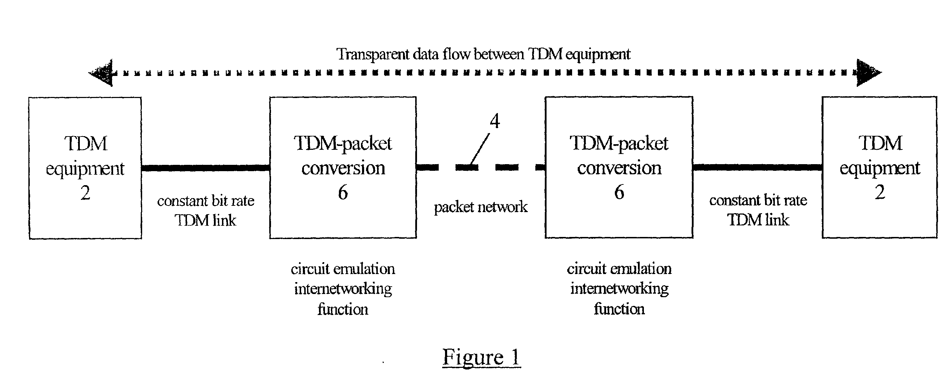

Figure 1 illustrates in very general terms a system for facilitating the transparent flow of data between two TDM equipment of networks 2 via a packet network 4 (illustrated schematically by a dashed line in Figure 1). TDM-packet conversion circuits or units 6 are necessary to convert the constant bit rate TDM data to and from packets for transmission over the packet network 4. This system must meet the following requirements:
1. Transmit constant bit rate TDM data across a packet network so that it can be reconstructed as TDM data at the far end;
2. Support the mapping of multiple TDM channels into a stream of packets (called a context) for transmission over a network;
3. Support multiple packet streams (contexts);
4. Maintain timeslot order when mapping TDM channels to and from context packets;
5. Each packet must contain one or more complete TDM frames of data; and
6. Packet transmission and reception must be aligned with the first TDM channel for the context after the TDM frame pulse.

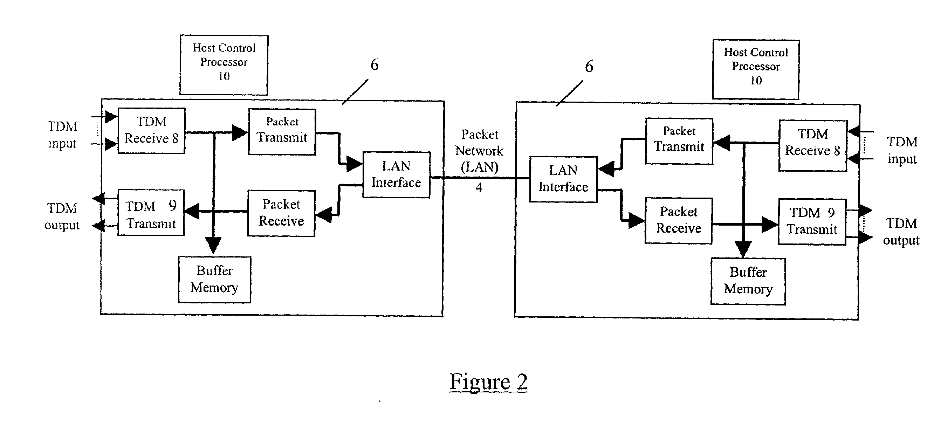

Figure 2 illustrates in more detail the TDM-packet conversion units 6 of Figure 1. Within a unit 6, a TDM receive block 8 assembles incoming TDM data into packets. The receiver can handle several packet streams at a time, where each packet stream represents a virtual channel connection or "context" over the packet network 4. Each packet comprises a header containing a context identifier. Different contexts may terminate at the same or different TDM-packet conversions units 6 (for example associated with different network operators). Due to the large number of channels and high data rate which the system must handle, the conversion units 6 are typically implemented in hardware.

A given context may carry several TDM channels. Packets are assembled sequentially. Data is placed into a packet as the data arrives at the (input) TDM port, maintaining channel and stream order (i.e. channel 0, stream 0 comes before channel 0, stream 1, which in turn comes before channel 1, stream 0). Each packet of a context must contain channel data belonging to one or more complete TDM frames - partial frames are not permitted - and each packet must start with the beginning of a new frame.

The TDM receive blocks 8 make use of a lookup tables to map stream and channel numbers from the TDM interface to a context number. Data is written to the lookup tables by the host control processors 10, with the hardware providing the receive blocks 8 cycling through the entries in the tables.

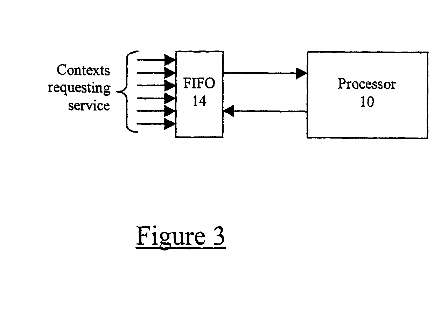

Figure 3 shows an improvement in which the identities of contexts which have raised an interrupt to the host control processor 10 are held in a FIFO 14.

If there is a problem relating to a context, for example an underrun error (where packets are not arriving fast enough, so that the TDM transmitter 9 runs short of packets, and is therefore unable to supply the required constant stream of TDM data), or an alignment error (where a packet is too long or too short, and data is therefore placed on the wrong TDM channel), the context can send an interrupt to the host control processor 10, requesting that the processor 10 analyses the problem.

To avoid losing context requests, the identity of the requesting contexts are placed in a FIFO (First In First Out) queue 14. A single processor 10 handles requests for service from several contexts. As requests arrive the identity of the requesting contexts are placed in the FIFO queue 14. When the processor 10 is ready to service another context it reads the entry at the head of the FIFO queue 14. The FIFO 14 can produce signals to indicate whether it is empty, and also whether it is overflowing (because the processor 10 is not processing requests fast enough). When the FIFO queue 14 empty signal indicates the queue is no longer empty the processor 10 is interrupted and services the context at the head of the queue. A context can place more than one request into the FIFO 14 ensuring requests are not missed while the processor 10 is busy. If requests arrive faster than they can be processed then the FIFO queue 14 will increase. Later when the request rate reduces the processor 10 is able to reduce the size of the queue by servicing the requests faster than they arrive.

A FIFO overflow signal or flag is used as a high priority interrupt to the processor 10 indicating that incoming requests are exceeding the processing capacity. The processor 10 can then take action to address the rate context requests are arriving and collect lost requests by directly polling the contexts or take other appropriate action.

The processor 10 and FIFO 14 could be implemented in hardware or software. The FIFO queue may be located anywhere, and can for example be located in both the TDM receive block 8, the TDM transmit block 9, or both blocks. Similarly, the control means for placing the identities of contexts in the FIFO 14 can be located anywhere.

Although in this embodiment, the processor 10 is a host control processor which receives requests from contexts, the invention is applicable to any processor which receives requests from modules of any kind. The identity of the modules requesting service can be placed in a FIFO queue, for subsequent processing by the processor.

## Claims

1. A system for processing requests for service from a plurality of modules, the system comprising:
a processor arranged to process said requests;
FIFO queue means providing a FIFO queue for storing the identities of said modules; and
control means for placing in the FIFO queue the identities of modules requiring service by the processor,
wherein when the processor is ready to service another module the processor reads the identity of the module at the head of the FIFO queue, and services that module.

2. A system as claimed in claim 1, wherein:
said FIFO queue means generates a signal indicating whether the FIFO queue is empty, and
the processor is arranged to be interrupted when said signal indicates that the FIFO queue is not empty, and to service the module at the head of the FIFO queue.

3. A system as claimed in claim 1 or 2, wherein:
said FIFO queue means generates an overflow signal when the FIFO queue is too full, and
the processor is arranged to treat said overflow signal as a high priority interrupt.

4. A system as claimed in claim 3, wherein in response to said high priority interrupt the processor takes action to reduce the rate at which said requests for service are arriving.

5. A system as claimed in claim 3 or 4, wherein in response to said high priority interrupt the processor takes action to collect any lost requests for service.

6. A system as claimed in any preceding claim, wherein said modules are contexts in a packet-TDM communication system.

7. A system as claimed in claim 6, wherein said control means is arranged to place the identity of a context into said FIFO queue when an error has occurred in relation to that context.

8. A system as claimed in claim 7, wherein said error is an underrun or alignment error.

9. A system as claimed in any preceding claim, wherein the processor is a host control processor in a packet-TDM communication system.

10. A system as claimed in any preceding claim, wherein said FIFO queue means is incorporated in a TDM receive block and/or a TDM transmit block.

11. A system as claimed in any preceding claim, wherein said control means is incorporated in a TDM receive block and/or a TDM transmit block.

12. A method of processing requests for service from a plurality of modules, the method comprising:
placing the identities of modules requiring service in a FIFO queue; and
processing each module in turn from the head of the FIFO queue.

13. A method as claimed in claim 12, wherein said modules are contexts in a packet-TDM system.
